# EUROPÄISCHE PATENTANMELDUNG

(11) **EP 4 617 510 A1**
(43) Veröffentlichungstag der Anmeldung: **17.09.2025**
(21) Anmeldenummer: 24162620.9
(22) Anmeldetag: 11.03.2024
(51) Int. Cl.: F16B 5/06

(54) **VERBINDUNGSSYSTEM UND CONTAINER MIT VERBINDUNGSSYSTEM**

(71) Anmelder: Schoeller Allibert GmbH, 19057 Schwerin (DE)
(72) Erfinder: Brinkers, Erik, 8032 DV Zwolle (NL); van der Korput, Max, 7251 VJ Vorden (NL); Hartwall, Peter, 26268 Ängelholm (SE)
(74) Vertreter: Winter, Brandl - Partnerschaft mbB

(57) **Zusammenfassung**

Verbindungssystem (2) zum positionsgenauen und lösbaren Verbinden von zwei Teilen, welche auf unterschiedliche Weisen gefertigt werden und unterschiedliche Herstellungstoleranzen aufweisen, vorzugsweise von einer äußeren, vorzugsweise spritzgegossenen, Verpackungseinheit (12) und einer inneren, vorzugweise aus Schaumstoff hergestellten, Verpackungseinheit (16). Mit einem ersten Verbindungspaar (18) aus einem mit dem einen Teil verbundenen oder verbindbaren ersten Verbindungabschnitt (22; 122) und einem mit dem anderen Teil verbundenen oder verbindbaren zweiten Verbindungabschnitt (24; 124) und einem zweiten Verbindungspaar (20) aus einem mit dem einen Teil verbundenen oder verbindbaren ersten Verbindungabschnitt (22; 122) und einem mit dem anderen Teil verbundenen oder verbindbaren zweiten Verbindungabschnitt (24; 124). Das erste Verbindungspaar (18) kann eine formschlüssige und lösbare Verbindung eingehen, welche einen translatorischen Freiheitsgrad in x-Richtung erlaubt und translatorische Freiheitsgrade in y- und z-Richtung unterbindet. Das zweite Verbindungspaar (20) kann eine formschlüssige und lösbare Verbindung eingehen, welche einen translatorischen Freiheitsgrad in y-Richtung erlaubt und translatorische Freiheitsgrade in x- und z-Richtung unterbindet.

## Beschreibung

### Technisches Gebiet

Die vorliegende Offenbarung betrifft ein Verbindungssystem gemäß dem Oberbegriff des Anspruchs 1 sowie einen Container mit einem solchen Verbindungssystem.

### Stand der Technik

Es ist bekannt, Verbindungselemente zum Befestigen von Auskleidungselementen an Wandflächen, beispielsweise von Behälterwänden, einzusetzen. Die Verwendung von Verbindungselementen ermöglicht die Verwendung verschiedener Materialien für die Auskleidung einerseits und die Behälterwand andererseits. Dies ermöglicht insbesondere eine Funktionstrennung von Wand- und Auskleidungselement. Während die Behälterwandung die Festigkeit und Stapelbarkeit eines Behälters sicherstellt, fungiert das Auskleidungselement als Dämpfung oder Abdichtung eines Behälterinhalts.

Die zur Erfüllung der jeweiligen Funktion notwendigen Materialien weisen unterschiedliche und oft auch gegensätzliche Materialeigenschaften auf. Je nach Material können die Herstellungstoleranzen unterschiedlich sein. Dies stellt entsprechend hohe Ansprüche an die Verbindung zwischen Behälter und Auskleidung bzw. zwischen äußerer und innerer Verpackungseinheit.

Ferner sind Verbindungselemente wie die der CN 219 707 867 U bekannt, welche eine Positionierung des Auskleidungselements an der Wandfläche ermöglichen. So können Verbindungselemente ein Verrutschen oder Verklemmen des Auskleidungselements verhindern und dessen Position relativ zum Wandelement festlegen. Dazu ist jedoch bei der Montage eine exakte Positionierung des Auskleidungselements bzw. des Verbindungselements relativ zum Wandelement notwendig. Insbesondere bei der Verwendung von zwei oder mehr Verbindungselementen ist zudem eine Übereinstimmung der Abmessungen des Wand- und Verbindungselements sowie der Position der Verbindungselemente für die Montage notwendig.

Es gibt auch Verbindungselemente, welche eine Demontage des Auskleidungselements ermöglichen. Beispielsweise kann mithilfe von Schrauben (EP 0 119 668 B1), Clips (DE 3 601 262 A1; DE 8 501 781 U1), Steckverbindern (ZA 2003 04 399 B) oder Klettverschlüssen (EP 0 110 022 B1) eine reversible Verbindung zwischen dem Auskleidungselement und dem Wandelement erfolgen. Die Montage und Demontage bedarf teils mehrere Einzelschritte sowie einer manuellen Interaktion und exakten Positionierung.

Eine Haltevorrichtung zur Montage eines Auskleidungsmaterials an einer Wandfläche ist beispielsweise aus der DE 10 2008 027 919 A1 bekannt. Die DE 10 2008 027 919 A1 offenbart ein angeklebtes oder angeschweißtes, zweiteiliges Verbindungselement, dessen Einzelteile zur Erzeugung einer dauerhaften und belastbaren Verbindung miteinander verklebt, verschweißt oder verpresst sein können. Ein derartiges Verbindungselement ermöglicht durch die zweiteilige Ausführung eine Anpassung an das Auskleidungs- bzw. Wandmaterial, verhindert jedoch aufgrund der dauerhaften Verbindung eine Demontage.

Die äußere und innere Verpackungseinheit müssen trennbar sein, z.B. um diese getrennt voneinander einem Wasch- oder Reinigungsprozess zuführen zu können. Darüber hinaus ist insbesondere im Bereich der Logistik der Automationsgrad sehr hoch. Um eine automatisierte Montage und Demontage der äußeren und inneren Verpackungseinheit bzw. der Behälterwandung und der Auskleidung zu ermöglichen und um Automationsfehler zu vermeiden, sind die Toleranzanforderungen an die Teile für die Roboter sehr hoch. Bei großen Behältern, wie IBC, beträgt die Fertigungstoleranz der spritzgegossenen Behälteraußenhülle über die Länge bei +/- 0,5 - 1,0mm, die des geschäumten Innenlebens dagegen bei bis zu +/- 6 mm.

Herkömmliche Verbindungssysteme können somit entweder nicht demontiert werden oder bedürfen einer aufwändigen manuellen Montage bzw. Demontage, sowie einer exakten Positionierung und stellen hohe Ansprüche an die Abmessungen der zu verbindenden Elemente.

### Zusammenfassung der Offenbarung

Es ist also Aufgabe der vorliegenden Offenbarung, die Nachteile des Standes der Technik zu überkommen oder zumindest zu mindern und insbesondere ein Verbindungssystem bereitzustellen, welches sowohl einfach montier- bzw. demontierbar ist, als auch herstellungs- oder materialbedingte Toleranzen der zu verbindenden Elemente ausgleichen kann.

Diese Aufgabe wird durch ein Verbindungssystem mit den Merkmalen des Anspruchs 1 gelöst.

Die vorliegende Offenbarung betrifft ein Verbindungssystem zum positionsgenauen und lösbaren Verbinden von zwei Teilen. Die beiden Teile sind insbesondere auf unterschiedliche Weise gefertigt und weisen unterschiedliche Herstellungstoleranzen auf. Das Verbindungssystem verbindet vorzugsweise eine äußere Verpackungseinheit und eine innere Verpackungseinheit. Die äußere Verpackungseinheit ist vorzugsweise aus Kunststoff und spritzgegossen, während die innere Verpackungseinheit vorzugsweise aus Schaumstoff hergestellt ist. Das Verbindungssystem hat ein erstes Verbindungspaar und ein zweites Verbindungspaar. Das erste Verbindungspaar und das zweite Verbindungspaar weisen einen mit dem einen Teil verbundenen oder verbindbaren ersten Verbindungsabschnitt und einen mit dem anderen Teil verbundenen oder verbindbaren zweiten Verbindungsabschnitt auf. Das erste Verbindungspaar kann offenbarungsgemäß eine formschlüssige und lösbare Verbindung eingehen, welche zwischen den Verbindungssteilen einen translatorischen Freiheitsgrad in eine erste Richtung (x-Richtung) erlaubt und translatorische Freiheitsgrade in eine dazu senkrechte zweite Richtung und in eine zu beiden senkrechte dritte Richtung (y- und z-Richtung) unterbindet. Das zweite Verbindungspaar kann offenbarungsgemäß eine formschlüssige und lösbare Verbindung eingehen, welche zwischen den Verbindungssteilen einen translatorischen Freiheitsgrad in die zweite Richtung (y-Richtung) erlaubt und translatorische Freiheitsgrade in die erste und dritte Richtung (x- und z-Richtung) unterbindet.

Erfindungsgemäß kann jedes Verbindungspaar eine formschlüssige und lösbare Verbindung eingehen, welche eine Verschiebung in jeweils eine erste Ebenenrichtung einer Verbindungsebene zulässt und eine Verschiebung in eine dazu orthogonale zweite Ebenenrichtung der Verbindungsebene und in eine dritte Richtung, d.h. in die Normalenrichtung der Verbindungsebene, verhindert. Die zulässigen translatorische Freiheitsgrade bzw. Verschiebungsrichtungen des ersten und zweiten Verbindungspaars sind dabei orthogonal zueinander. Die vom Verbindungssystem hergestellte Verbindung zwischen den beiden Teilen deckt die Normalenrichtung der Verbindungsebene aufgrund des ersten und zweiten Verbindungspaars, sowie eine erste Ebenenrichtung der Verbindungsebene aufgrund des ersten Verbindungspaars und die zur ersten Ebenenrichtung orthogonalen zweiten Ebenenrichtung der Verbindungsebene aufgrund des zweiten Verbindungspaars ab. Das Verbindungssystem unterbindet somit bei geschlossener Verbindung eine Relativbewegung der beiden Teile in allen drei Raumrichtungen. Die Verbindung des Verbindungssystems ist somit statisch vollständig bestimmt.

Der erste Freiheitsgrad des ersten Verbindungspaars in Ebenenrichtung der Verbindungsebene und der zum Freiheitsgrad des ersten Verbindungspaars orthogonale zweite Freiheitsgrad ermöglichen den Ausgleich von Toleranzen und/oder Lagefehlern in der Verbindungsebene der beiden Teile beim Verbinden. So kann beispielsweise eine unterschiedliche Länge der beiden Teile bzw. eine abweichende Position des ersten und zweiten Verbindungsabschnitts in Längenrichtung der beiden Teile mithilfe des Freiheitsgrad des ersten Verbindungspaars ausgeglichen werden und/oder eine verschiedene Breite der beiden Teile bzw. eine abweichende Position des ersten und zweiten Verbindungsabschnitts in Breitenrichtung der beiden Teile mithilfe des Freiheitsgrades des zweiten Verbindungspaars ausgeglichen werden.

D.h. das erste Verbindungspaar legt die beiden Teile in einer erste Ebenenrichtung fest und ermöglicht einen Ausgleich in der orthogonalen zweiten Ebenenrichtung und das zweite Verbindungspaar legt die beiden Teile in der zweiten Ebenenrichtung fest und ermöglicht einen Ausgleich in der orthogonalen ersten Ebenenrichtung. Beide Verbindungspaare hingegen unterbinden den Freiheitsgrad in die dritte Richtung und somit ein Lösen der Verbindungspaare bzw. der beiden darüber verbundenen Teile.

Die entgegengesetzte Aufteilung von je einem erlaubten translatorischen Freiheitsgrad in einer ersten bzw. zweiten Ebenenrichtung und einem unterbundenen translatorischen Freiheitsgrad in einer zur ersten bzw. zweiten Ebenenrichtung orthogonalen zweiten bzw. ersten Ebenenrichtung stellt sicher, dass jedes Verbindungspaar unabhängig von ausgeglichenen Form- und Lagetoleranzen in seiner Position in der Ebenenrichtung, in der die Translation unterbunden ist, festgelegt ist. Ebenso ist die Position des ersten und zweiten Teils relativ zueinander in dieser Ebenenrichtung bestimmt. Die Position des Verbindungspaars sowie die Position der beiden Teile relativ zueinander in Normalenrichtung ist aufgrund des unterbindenden Freiheitgrads in Normalenrichtung ebenso festgelegt. Die Festlegung der Verbindungspaare bzw. derer Verbindungsabschnitte ist insbesondere für eine Automatisierbarkeit des Verbindungs- und Trennungsvorgangs des Verbindungssystems notwendig.

Vorzugsweise entspricht das erste Verbindungspaar dem zweiten Verbindungspaar, ist jedoch dazu um einen Winkel von 90° gedreht.

Vorteilhafte Weiterbildungen der vorliegenden Offenbarung sind Gegenstand von Unteransprüchen.

Vorzugsweise weist das Verbindungssystem zwei erste Verbindungspaare und zwei zweite Verbindungspaare auf. Die beiden ersten Verbindungspaare können in x-Richtung auf einer Linie angeordnet sein und die beiden zweiten Verbindungspaare können in y- Richtung auf einer Linie angeordnet sein. D.h. die Verbindungspaare können jeweils in jener Richtung auf einer Linie angeordnet sein, in welcher die Verbindungspaare jeweils einen translatorischen Freiheitsgrad erlauben. Die beiden Linien können orthogonal zueinander sein und deren Richtungen können die beiden Ebenenrichtungen darstellen.

Die Verwendung von je zwei Verbindungspaaren, die entlang deren jeweiligen Freiheitsgrades voneinander beabstandet sind, kann eine Rotation der beiden Teile um die Normale der Verbindungsebene gegeneinander unterbinden. Zudem können die Linien auf denen die Verbindungspaare angeordnet sind unabhängig von Form- und Größenabweichungen der beiden Teile festgelegt sein und können als Referenzen bei einer Automatisierung der Verbindung des Verbindungssystems zur Verfügung stehen.

Vorzugsweise entsprechen die beiden ersten Verbindungspaare den beiden zweiten Verbindungspaaren, sind jedoch dazu um einen Winkel von 90° gedreht. Insbesondere entsprechen alle vier Verbindungspaare einander, sind jedoch dazu um einen Winkel von 90° bzw. 180° bzw. 270° gedreht.

Ebenso vorzugsweise liegt der Abstand zweier Verbindungspaare in Richtung deren erlaubten Freiheitsgrads in einem Bereich von 150% bis 95%, vorzugsweise bei 65%, 170% oder 75%, der Abmessung eines der beiden Teile in vorgenannter Richtung.

Nach einem optionalen Aspekt der Offenbarung können die beiden ersten Verbindungsabschnitte und/oder die beiden zweiten Verbindungsabschnitte der beiden ersten Verbindungspaare auf einer ersten Symmetrielinie oder Seitenhalbierende des ersten Teils und/oder des zweiten Teils angeordnet sein. Die beiden ersten Verbindungsabschnitte und/oder die beiden zweiten Verbindungabschnitte der beiden zweiten Verbindungspaare können auf einer zweiten Symmetrielinie oder Seitenhalbierende des ersten Teils und/oder des zweiten Teils angeordnet sein.

D.h. die Verbindungsabschnitte zweier Verbindungspaare können auf der Symmetrielinie oder Seitenhalbierenden liegen, welche in der Richtung des erlaubten translatorischen Freiheitsgrads der beiden Verbindungspaare zeigt. Die x- bzw. y-Richtung der Verbindungspaare sowie die Linien auf denen die Verbindungspaare angeordnet sind können mit den Symmetrielinien oder Seitenhalbierenden des ersten Teils und/oder zweiten Teils übereinstimmen. D.h. das Verbindungssystem kann eine Zentrierung der beiden Teile bzw. zumindest einer Aufnahme im zweiten Teil für den zweiten Verbindungsabschnitt gegenüber dem ersten Teil ermöglichen. Diese kann unabhängig von Form- und Größenabweichungen der Teile, insbesondere des zweiten Teils erfolgen.

Zur Automatisierung der Verbindung des Verbindungsystems ist es notwendig, die Position der Verbindungspaare möglichst einfach bestimmen zu können. Ist die Position und Orientierung des ersten Teils bekannt, so kann die Position der Verbindungspaare in deren zwei Richtungen unterbundener translatorischer Freiheitsgrade bis auf die Toleranz des ersten Teils bekannt sein. Die Position der Verbindungspaare in deren Richtung des erlaubten translatorischen Freiheitsgrads kann von Form und Größe des zweiten Teils abhängen, d.h. die Position in dieser Richtung kann bis auf die Toleranz des zweiten Teils bekannt sein. Bei der Verwendung einer spritzgegossenen Verpackungseinheit als erstes Teil und einer aus Schaumstoff hergestellten Verpackungseinheit als zweites Teil kann die (Herstellungs-) Toleranz des ersten Teils geringer sein als die (Herstellungs-) Toleranz des zweiten Teils. Unabhängig von der Toleranz des zweiten Teils kann die Positionen der Verbindungspaare zumindest in je zwei Richtungen d. h. Dimensionen bis auf die geringere Toleranz des ersten Teils bekannt sein, während Abweichungen aufgrund der größeren Toleranz des zweiten Teils von dem Verbindungssystem ausgeglichen werden können.

Es ist weiterhin vorteilhaft, dass der zweite Verbindungsabschnitt zwei Verbindungsteile aufweisen kann, welche von zwei entgegengesetzten Richtungen in eine Ausnehmung des zweiten Teils einsetzbar und miteinander lösbar verbindbar sein können. Mithilfe von umlaufenden Randabschnitten können die beiden Verbindungsteile das zweite Teil sandwichartig zwischen sich aufnehmen oder können es zwischen sich einklemmen. Vorzugsweise sind die beiden Verbindungsteile identisch. Die lösbare Verbindung zwischen den beiden Verbindungsteilen kann vorzugsweise über eine Clipverbindung erfolgen.

D.h. für die Verbindung zwischen dem zweiten Verbindungsabschnitt und zweitem Teil kann es am zweiten Teil lediglich einer Ausnehmung d.h. einem Durchgriff oder einem Durchgangsloch bedürfen, bei dem kein besonderer Anspruch an Form- oder Lagetoleranzen gestellt wird. Die sandwichartige Aufnahme bzw. Klemmung kann bei entsprechender Gestaltung der umlaufenden Randabschnitte eine großflächige Verteilung von Klemm- oder Gewichtskräften und daher eine geringe Flächenerpressung erzeugen, wie sie insbesondere bei der Verwendung eines Schaumstoffs als zweites Teil notwendig sein kann. Eine identische Gestaltung beider Verbindungsteile kann die Fertigung vereinfachen.

Nach einem weiteren optionalen Aspekt der Offenbarung kann der erste und der zweite Verbindungsabschnitt des ersten Verbindungspaars eine in x-Richtung verlaufende Rastgeometrie aufweisen, um eine Rastverbindung einzugehen. Der erste und der zweite Verbindungsabschnitt des zweiten Verbindungspaars können eine in y-Richtung verlaufende Rastgeometrie aufweisen, um eine Rastverbindung einzugehen. Die Rastgeometrien der ersten Verbindungsabschnitte können insbesondere jeweils zwei parallele Rastkanten aufweisen, während die Rastgeometrien der zweiten Verbindungsabschnitte insbesondere jeweils zwei parallel angeordnete Rasthaken aufweisen können.

D.h. die Rastgeometrien der Verbindungspaare können jeweils in der Richtung verlaufen, in welcher der translatorische Freiheitsgrad erlaubt ist. Die insbesondere parallele Erstreckung der Rastgeometrie entlang einer Richtung kann eine Verschiebung innerhalb der Rastverbindung entlang dieser Richtung erlauben. Insbesondere kann diese Verschiebung zwischen der Rastkante und dem Rasthaken der Rastverbindung erfolgen. Eine Verschiebung in Richtung der beiden unterbundenen translatorischen Freiheitsgrade kann aufgrund eines Kontakts der Rastgeometrien, insbesondere von Rastkannte und Rasthaken unterbunden werden.

Vorzugsweise ist die Ausdehnung der Rasthaken in Richtung des erlaubten translatorischen Freiheitsgrads geringer als die der Rastkanten. Die innerhalb des Verbindungspaars möglichen Verschiebung in Richtung des erlaubten translatorischen Freiheitsgrads kann insbesondere der Differenz der Ausdehnungen, d.h. der Länge, von Rasthaken und Rastkante entsprechen.

Es ist weiterhin vorteilhaft, dass der zweite Verbindungsabschnitt ein Handhabungselement aufweisen kann, in welches ein Effektor einer Automation eingreifen kann bzw. welches ein Effektor einer Automation umgreifen kann und so die Rastgeometrien in z-Richtung in eine Rastposition oder aus einer Rastposition bringen kann. Insbesondere kann jenes Verbindungsteil des zweiten Verbindungsabschnitts, welches die Rastgeometrie aufweist das Handhabungselement aufweisen.

D.h. das Handhabungselement kann vorgesehen und ausgebildet sein vom Effektor kraft- und/oder formschlüssig gegriffen zu werden, um damit den zweiten Verbindungsabschnitt zu manipulieren und die Verbindung zwischen dem ersten und zweiten Verbindungsabschnitt herstellen oder lösen zu können. Neben der Positionierung des zweiten Verbindungsabschnitts über dem ersten Verbindungsabschnitt kann der Effektor die Rastgeometrie des zweiten Verbindungsabschnitts in Normalenrichtung der Verbindungsebene bis zum Erreichen einer Rastposition auf die Rastgeometrie des ersten Verbindungsabschnitts schieben. Zur Demontage kann der Effektor die Rastgeometrie des zweiten Verbindungsabschnitts in Normalenrichtung der Verbindungsebene bis zum Verlassen der Rastposition von der Rastgeometrie des ersten Verbindungsabschnitts abziehen und den zweiten Verbindungsabschnitt an einer gewünschten Position positionieren bzw. ablegen.

Vorzugsweise kann das zweite Teil mithilfe eines oder mehrerer Effektoren, der oder die in die mit dem zweiten Teil verbundenen zweiten Verbindungsabschnitte der Verbindungspaare eingreifen und/oder Handhabungselemente der zweiten Verbindungsabschnitte umgreifen, manipuliert werden, mit dem ersten Teil verbunden werden und von dem ersten Teil gelöst werden.

Nach einem weiteren optionalen Aspekt der Offenbarung kann der erste Verbindungsabschnitt des ersten Verbindungspaars eine in x-Richtung verlaufende Verriegelungsgeometrie aufweisen. Der zweite Verbindungsabschnitt des ersten Verbindungspaars kann ein in x-Richtung verschiebbares Verriegelungselement aufweisen, welches mit dem zweiten Verbindungsabschnitt gekoppelt sein kann. Das Verriegelungselement kann zwischen einer Entriegelungsposition und einer Verriegelungsposition verschiebbar sein und kann eine Verriegelungsgeometrie aufweisen, welche in der Verriegelungsposition die Verriegelungsgeometrie des ersten Verbindungsabschnitts in z-Richtung hintergreifen kann und in y-Richtung kontaktieren kann. Der erste Verbindungsabschnitt des zweiten Verbindungspaars kann eine in y-Richtung verlaufende Verriegelungsgeometrie aufweisen. Der zweite Verbindungsabschnitt des zweiten Verbindungspaars kann ein in y-Richtung verschiebbares Verriegelungselement aufweisen, welches mit dem zweiten Verbindungsabschnitt gekoppelt sein kann. Das Verriegelungselement kann zwischen einer Entriegelungsposition und einer Verriegelungsposition verschiebbar sein und eine Verriegelungsgeometrie aufweisen, welche in der Verriegelungsposition die Verriegelungsgeometrie des ersten Verbindungsabschnitts in z-Richtung hintergreifen kann und in x-Richtung kontaktieren kann. Die Verriegelungsgeometrien der ersten Verbindungabschnitte des ersten und zweiten Verbindungspaars können insbesondere zwei parallel verlaufende Hinterschnitte aufweisen. Die Verriegelungsgeometrien der zweiten Verbindungabschnitte des ersten und zweiten Verbindungspaars können insbesondere zwei parallel verlaufende Verriegelungsrippen aufweisen. Der Kontakt der Verriegelungsgeometrien des ersten Verbindungsabschnitts und des zweiten Verbindungsabschnitts des ersten und zweiten Verbindungspaars kann insbesondere beidseitig erfolgen.

D.h. die Verriegelungsgeometrie der ersten Verbindungsabschnitte des ersten und zweiten Verbindungspaars können jeweils in der Richtung verlaufen, in welche der translatorische Freiheitsgrad erlaubt ist. In derselben Richtung können die Verriegelungselemente der zweiten Verbindungsabschnitte des ersten und zweiten Verbindungspaars verschiebbar sein. Der Kontakt der Verriegelungsgeometrien der ersten und zweiten Verbindungsabschnitte kann jeweils in den beiden anderen orthogonalen Raumrichtungen erfolgen. Die insbesondere entlang einer Richtung parallel verlaufenden Hinterschnitte der Verriegelungsgeometrie können eine Verschiebung innerhalb des Verbindungspaars entlang dieser Richtung erlauben. Insbesondere kann diese Verschiebung zwischen den Verriegelungsgeometrien des ersten Verbindungsabschnitts und des Verriegelungselements des zweiten Verbindungsabschnitts erfolgen. Eine Verschiebung in Richtung der beiden unterbundenen translatorischen Freiheitsgrade kann aufgrund eines Kontakts der Verriegelungsgeometrien, insbesondere von Hinterschnitten und Verriegelungsrippen, zusammen mit einem Kontakt der Verriegelungselemente mit den Verbindungsteilen unterbunden werden.

Vorzugsweise kann die Koppelung des Verriegelungselements des ersten Verbindungspaars mit dem zweiten Verbindungsabschnitt, insbesondere mit dessen beiden Verbindungsteilen, einen translatorischen Freiheitsgrad in x-Richtung erlauben und kann translatorische Freiheitsgrade in y- und z-Richtung unterbinden und die Koppelung des Verriegelungselements des zweiten Verbindungspaars mit dem zweiten Verbindungsabschnitt, insbesondere mit dessen beiden Verbindungsteilen, kann einen translatorischen Freiheitsgrad in y-Richtung erlauben und kann translatorische Freiheitsgrade in x- und z-Richtung unterbinden.

Das Verriegelungselement kann in der Verriegelungsposition und/oder Entriegelungsposition mit dem zweiten Verbindungsabschnitt, insbesondere mit einem und/oder beiden Verbindungsteilen, verrasten.

D.h. die Verschiebung innerhalb des Verbindungspaare entlang des erlaubten translatorischen Freiheitsgrads kann innerhalb eines geometrisch möglichen Bereichs unabhängig von einer Bewegung und/oder Position des Verriegelungselements erfolgen.

Vorzugsweise ist die Ausdehnung der Hinterschnitte in Richtung des erlaubten translatorischen Freiheitsgrads geringer als die der Verriegelungsrippen. Die innerhalb des Verbindungspaars möglichen Verschiebung in Richtung des erlaubten translatorischen Freiheitsgrads kann geringer als die Ausdehnung, d.h. die Länge, der Hinterschnitte sein.

Es ist weiterhin vorteilhaft, dass das Verriegelungselement eine Handhabungsöffnung und/oder ein Handhabungselement aufweist, in welche ein Effektor einer Automation in z-Richtung eingreifen und/oder welches ein Effektor einer Automation umgreifen und wahlweise das Verriegelungselement in die x-Richtung oder y-Richtung in die Verriegelungsposition oder in die Entriegelungsposition verschieben kann.

D.h. die Handhabungsöffnung ist vorgesehen und ausgebildet, dass der Effektor in diese eingreifen kann und/oder vom Effektor kraft- und/oder formschlüssig gegriffen werden zu können, um damit das Verriegelungselement zu manipulieren und die Verbindung zwischen dem ersten und zweiten Verbindungsabschnitt herstellen oder lösen zu können. Neben der Positionierung des ersten Verbindungsabschnitts auf dem zweiten Verbindungsabschnitt kann der Effektor das Verriegelungselement des zweiten Verbindungsabschnitts in Richtung des erlaubten translatorischen Freiheitsgrads des Verbindungspaars, insbesondere bis zum Erreichen einer Rastposition, gegenüber den beiden Verbindungsteilen und/oder dem ersten Verbindungsabschnitt verschieben. Zur Demontage kann der Effektor das Verriegelungselement des zweiten Verbindungsabschnitts in die entgegengesetzte Richtung, insbesondre bis zum Erreichen einer zweiten Rastposition, gegenüber den beiden Verbindungsteilen und/oder dem ersten Verbindungsabschnitt verschieben und den ersten Verbindungsabschnitt an einem gewünschten Ort positionieren bzw. ablegen.

Vorzugsweise kann das zweite Teil mithilfe eines oder mehrerer Effektoren, der oder die in die mit dem zweiten Teil verbundenen zweiten Verbindungsabschnitte und/oder die damit verbundenen Verriegelungselemente der Verbindungspaare eingreifen und/oder Handhabungsöffnungen bzw. Handhabungselemente der Verriegelungselemente umgreifen, manipuliert werden, mit dem ersten Teil verbunden werden und von dem ersten Teil gelöst werden.

Nach einem weiteren optionalen Aspekt der Offenbarung kann der Container gemäß einem weiteren nebengeordneten Anspruch eine äußere Verpackungseinheit, eine innere Verpackungseinheit und ein Verbindungssystem eines der obigen Aspekte aufweisen. Das erste Teil kann ein Wandungsabschnitt der äußeren Verpackungseinheit sein und der erste Verbindungsabschnitt kann einstückig mit dem ersten Teil ausgebildet sein. Der zweite Teil kann ein plattenförmiges Wandelement der inneren Verpackungseinheit sein und der zweite Verbindungsabschnitt kann in eine Ausnehmung in dem Wandelement einsetzbar sein. Die äußere Verpackungseinheit kann vorzugsweise spritzgegossen sein. Die innere Verpackungseinheit kann vorzugweise aus Schaumstoff hergestellt sein. Der Wandungsabschnitt kann vorzugsweise ein Deckel sein. Das plattenförmige Wandelement kann vorzugsweise eine Abdeckung sein.

Nach einem weiteren optionalen Merkmal der Offenbarung kann der erste Verbindungsabschnitt auf das erste Teil geschweißt und/oder geklebt und/oder geschraubt und/oder genietet werden. Dies kann insbesondre zur Nachrüstung berstender Container erfolgen.

### Kurzbeschreibung der Figuren

Fig. 1 zeigt eine isometrische Darstellung eines Containerdeckels mit einem Dämpfungselement und einem offenbarungsgemäßen Verbindungssystem;
Fig. 2 zeigt eine Draufsicht einer Innenseite des Containerdeckels mit dem Dämpfungselement und dem geschlossenen Verbindungssystem;
Fig. 3 zeigt eine Draufsicht der Innenseite des Containerdeckels mit dem Dämpfungselement und dem geöffneten Verbindungssystem;
Fig.4 zeigt eine isometrische Explosionsdarstellung eines Schiebersystems;
Fig. 5 zeigt eine Draufsicht einer Innenseite des verbundenen Schiebersystems;
Fig. 6 zeigt eine Schnittdarstellung des verbundenen Schiebersystems mit einem Schnittverlauf und einer Projektionsrichtung aus Fig. 5; und
Fig. 7 zeigt eine isometrische Explosionsdarstellung eines Clipsystems;
Fig. 8 zeigt eine Draufsicht einer Innenseite des verbundenen Clipsystems;
Fig. 9 zeigt eine Schnittdarstellung des verbundenen Clipsystems mit einem Schnittverlauf A-A und einer Projektionsrichtung aus Fig. 8;
Fig. 10 zeigt eine Schnittdarstellung des verbundenen Clipsystems mit einem Schnittverlauf B-B und einer Projektionsrichtung aus Fig. 8;
Fig. 11 zeigt einen Container mit dem Containerdeckel; und
Fig. 12 zeigt Schnittdarstellung des Containers mit dem Containerdeckel;

### Detaillierte Beschreibung der Figuren

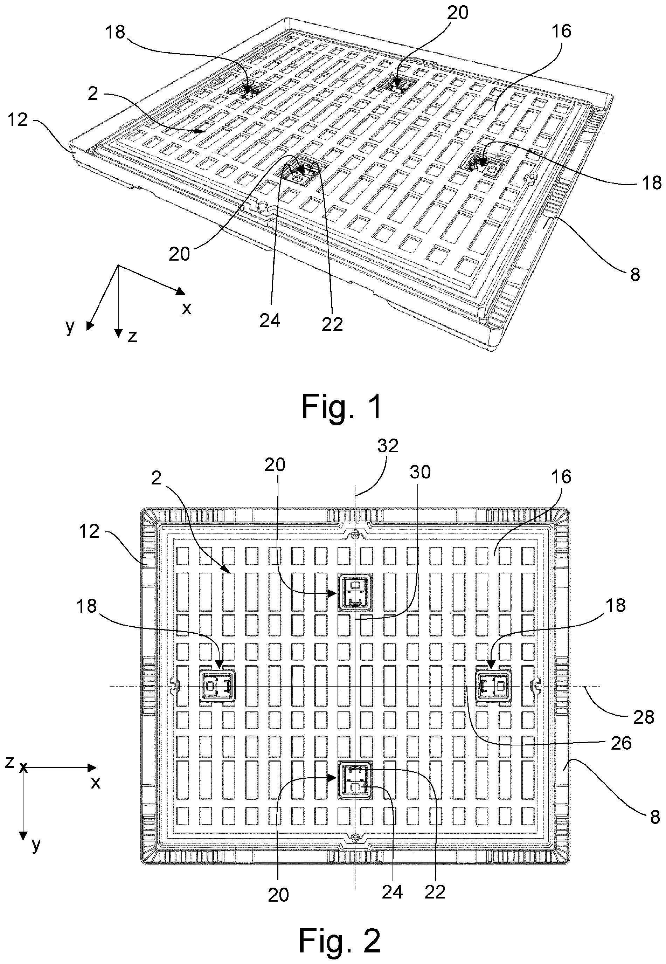

Fig. 1 zeigt ein offenbarungsgemäßes Verbindungssystem 2, welches an einer Innenseite 8 eines Containerdeckels 12 ein Auskleidungs- oder Dämpfungselement 16 fixiert. Der Containerdeckel 12 ist im Spritzgießverfahren aus Kunststoff gefertigt. Das rechteckförmige Dämpfungselement 16 ist aus Schaumstoff und in seinen Abmessungen kleiner als der rechteckförmige Containerdeckel 12. Mithilfe des Verbindungssystems 2 kann das Dämpfungselement 16 - unabhängig von herstellungsbedingten Abmessungsunterschieden - zentriert an dem Containerdeckel 12 angebracht werden.

Hierzu umfasst das Verbindungssystem 2 zwei erste Verbindungspaare 18 und zwei zweite Verbindungspaare 20. Jedes Verbindungspaar 18, 20 umfasst jeweils einen ersten Verbindungsabschnitt 22, welcher (einstückig) mit dem Containerdeckel 12 verbunden ist, und einen zweiten Verbindungsabschnitt 24, welcher mit dem Dämpfungselement 16 verbunden oder verbindbar ist. Die Verbindungspaare 18 und 20 sind identisch ausgebildet und unterscheiden sich lediglich in ihrer Ausrichtung bzw. Orientierung.

Fig. 2 zeigt die Innenseite 8 des Containerdeckels 12 und des Dämpfungselements 16, welche über vier Verbindungspaare 18, 20 des Verbindungssystems 2 verbunden sind.

Die beiden ersten Verbindungspaare 18 sind auf einer Linie 26 angeordnet, wobei die Linie 26 der Symmetrielinie bzw. Seitenhalbierenden 28 des Containerdeckels 12 und des Dämpfungselements 16 entspricht. Die Linie 26 und die Symmetrielinie bzw. Seitenhalbierende 28 verlaufen in Längsrichtung x des Containerdeckels 12.

Die beiden zweiten Verbindungspaare 20 sind auf einer Linie 30 angeordnet, wobei die Linie 30 der Symmetrielinie bzw. Seitenhalbierenden 32 des Containerdeckels 12 und des Dämpfungselements 16 entspricht. Die Linie 30 und die Symmetrielinie bzw. Seitenhalbierende 32 verlaufen in Breitenrichtung y des Containerdeckels 12.

Die beiden ersten und zweiten Verbindungspaare 18, 20 entsprechen einander, sind aber unterschiedlich orientiert, genauer gesagt um 90° um die Höhenrichtung z des Containerdeckels 12 zueinander verdreht.

Die Verbindungspaare 18, 20 sind jeweils in einem ersten oder geöffneten Zustand miteinander verbindbar bzw. voneinander lösbar und in einem zweiten oder geschlossenen Zustand miteinander verbunden.

In Fig. 2 sind sie jeweils im geschlossenen Zustand dargestellt, bei welchem der erste Verbindungsabschnitt 22 und der zweite Verbindungabschnitt 24 miteinander gekoppelt sind.

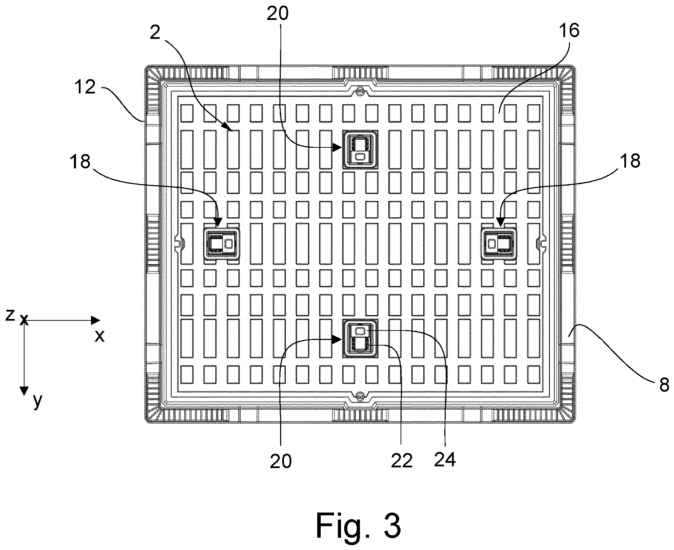

In Fig. 3 sind die Verbindungspaare 18, 20 jeweils im geöffneten Zustand dargestellt, bei welchem der erste Verbindungsabschnitt 22 und der zweite Verbindungabschnitt 24 nicht gekoppelt sind, d.h. in einem Zustand, in dem das Dämpfungselement 16 an dem Containerdeckel anbringbar bzw. von diesem lösbar ist.

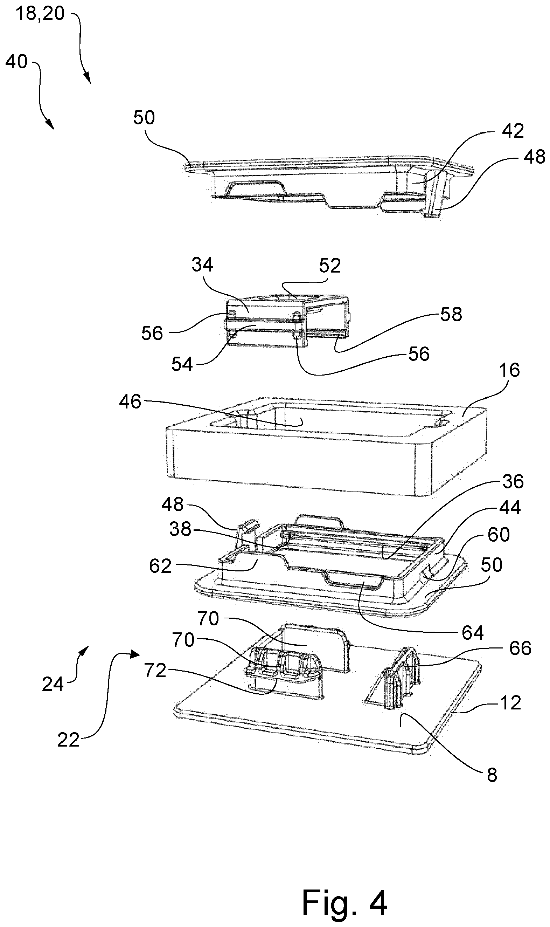

Fig. 4 zeigt eine isometrische Explosionsdarstellung eines ersten oder zweiten Verbindungspaars 18, 20 in einer ersten Ausführungsform als Schiebersystem 40, einen Ausschnitt des Dämpfungselements 16 sowie einen Ausschnitt des Containerdeckels 12. Das Schiebersystem 40 umfasst einen ersten Verbindungsabschnitt 22, der am Containerdeckel 12 ausgebildet ist, sowie zwei Verbindungsteile 42, 44, und einen Verriegelungsschlitten 34, die zusammen den zweiten Verbindungsabschnitt 24 bilden.

Das Dämpfungselement 16 weist vier, im Wesentlichen rechteckige, Ausnehmungen 46 auf und zwar an den Stellen, an denen es mit dem Containerdeckel 12 verbunden werden soll, d.h. im Bereich der Verbindungspaare 18, 20.

Die beiden Verbindungsteile 42, 44 sind identisch ausgebildet. Sie sind rechteck- und ringförmig ausgebildet, mit einem umlaufenden Kragen 50 und einer senkrecht auf dem Kragen 50 stehenden und umlaufenden Wandung. Außerhalb der Wandung und parallel zu dieser ist ein Schnapphaken 48 ausgebildet, welche an einer der kurzen Seiten der Verbindungsteile 42, 44 jeweils mittig vorgesehen sind. Auf der anderen kurzen Seite ist mittig eine seitliche Ausnehmung 60 vorgesehen. Die langen Seiten der Wandung weisen jeweils eine vorspringende Lasche 62 und eine Vertiefung 64, welche der Form der Lasche 62 entspricht, auf.

Wenn die Verbindungsteile 42, 44 zueinander um 180 Grad verdreht mit den Schnapphaken 48 voraus von beiden Seiten in die Ausnehmung 46 des Dämpfungselements 16 eingesteckt werden, dann übergreifen die Schnapphaken 48 das jeweils andere Verbindungsteil 44 bzw. 42 und greifen in die entsprechenden seitlichen Ausnehmungen 60 ein, so dass die beiden Verbindungsteile 42, 44 miteinander verrasten. Ferner tauchen die Laschen 62 des einen Verbindungsteils 42 in die Vertiefungen 64 des anderen Verbindungsteils 44 ein und umgekehrt, so dass diese verdrehsicher miteinander gekoppelt sind.

An den langen Innenseiten der Verbindungsteile 42, 44 ist jeweils über die gesamte Länge eine Längsrippe 36 vorgesehen, welche an beiden Enden jeweils eine Rastnase 38 aufweist. Die Längsrippen 36 dienen zur Führung eines Verriegelungsschlittens 34, welcher, wenn die beiden Verbindungsteile 42, 44 miteinander verbunden und verrastet sind, zwischen den beiden Teilen 42, 44 gefangen, aber längsverschieblich aufgenommen ist.

Der Verriegelungsschlitten 34 ist im Wesentlichen C-förmig ausgebildet, wobei die offene Seite zum Containerdeckel 12 hinweist. An beiden Schenkeln des Verriegelungsschlitten 34 ist eine Gleitrippe 54 ausgebildet, die zwischen den Längsrippen 36 an den langen Innenseiten der Verbindungssteile 42, 44 sandwichartig aufgenommen ist und entlang den Längsrippen 36 gleiten kann. Die Längsrippe 36 des Verbindungsteils 42 und die Längsrippe 36 des Verbindungsteils 44 stellen somit (oberen und untere) Führungsschienen für den Verriegelungsschlitten 34 dar.

An beiden Enden und zu beiden Seiten der Gleitrippe 54 sind Rastnasen 56 vorgesehen, welche in beiden Endpositionen des Verriegelungsschlittens 34 mit den jweiligen Rastnasen 38 an den Längsrippen 36 in Eingriff kommen, welche ein Verrasten des Verriegelungsschlitten 34 in einer geöffneten oder geschlossenen Position ermöglichen.

Wenn die beiden Verbindungsteile 42 und 44 miteinander verrastet sind, liegen deren umlaufende Kragen 50 an beiden Seiten des Dämpfungsteils 16 an, so dass die beiden Verbindungsteile 42 und 44 das Dämpfungsteil 16 sandwichartig zwischen sich aufnehmen bzw. einspannen. Dadurch wird eine Relativbewegung zwischen Verbindungsabschnitt 24 und dem Dämpfungselement 16 unterbunden. Im verbundenen Zustand bilden die Verbindungsteile 42 und 44 den zweiten Verbindungsabschnitt 24.

Der C-förmige Verriegelungsschlitten 34 weist an der geschlossenen Seite eine zentrale Handhabungsöffnung 52 auf, welche zum Eingreifen für einen Manipulator oder Effektor z.B. eines Roboters dient. An der offenen Seite bzw. an den freien Enden des Verriegelungsschlittens 34 sind nach innen kragende Verriegelungsrippen 58 vorgesehen, über welche sich der dämpfungselementseitige Verbindungsabschnitt mit dem containerdeckelseitigen Verbindungsabschnitt koppeln lässt.

Der erste Verbindungsabschnitt 22, welcher (einstückig) an der Innenseite 8 des Containerdeckels 12 ausgebildet ist, weist zwei zueinander beabstandete und sich parallel erstreckende Verriegelungsschienen 70 auf, welche zusammen mit einem rechtwinklig dazu verlaufenden Vorsprung 66 ein Rechteck aufspannen. Die Verriegelungsschienen 70 weisen jeweils einen nach außen gerichteten Hinterschnitt 72 auf.

Wenn der zweite Verbindungsabschnitt 24, bestehend aus den zwei Verbindungsteilen 42, 44 und dem zwischen diesen liegenden Verriegelungsschlitten 34, auf den ersten Verbindungsabschnitt 22 am Containerdeckel 12 gestülpt wird, und anschließend der Verriegelungsschlitten 34 von seiner einen Endposition (Entriegelungsstellung) zu seiner anderen Endposition (Verriegelungsstellung) geschoben wird, hintergreifen die Verriegelungsrippen 58 des Verriegelungsschlittens 34 die Hinterschnitte 72 des ersten Verbindungsabschnitts 22, lassen aber weiterhin eine Relativverschiebung zwischen den beiden Verbindungsabschnitten 22 und 24 entlang deren Längsrichtung zu. Gleiches gilt für die Verbindungsabschnitte 22 und 24 deren anderen Verbindungspaare 18, 20. Dieser Freiheitsgrad dient zum Ausgleich von etwaigen Längen- und Positionsunterschieden zwischen den beiden zu verbindenden Teilen (Containerdeckel 12 und Dämpfungselement 16). Da die Verbindungspaare 18, 20 jedoch um 90 Grad zueinander verdreht sind, blockiert das eine Verbindungspaar 18 (nach dem Toleranzausgleich) die Längsverschiebbarkeit des anderen Verbindungspaars 20 und umgekehrt.

Sowohl die Innenkante der Verbindungsteile 42, 44 des ersten Verbindungsabschnitts, als auch die Verriegelungsschienen 70 und der Vorsprung 66 des zweiten Verbindungsabschnitts sind mit Einführschrängen versehen, sodass sich das Verbindungsteil 44 beim Stülpen über die Verriegelungsschienen 70 und den Vorsprung 66 selbstzentrieren.

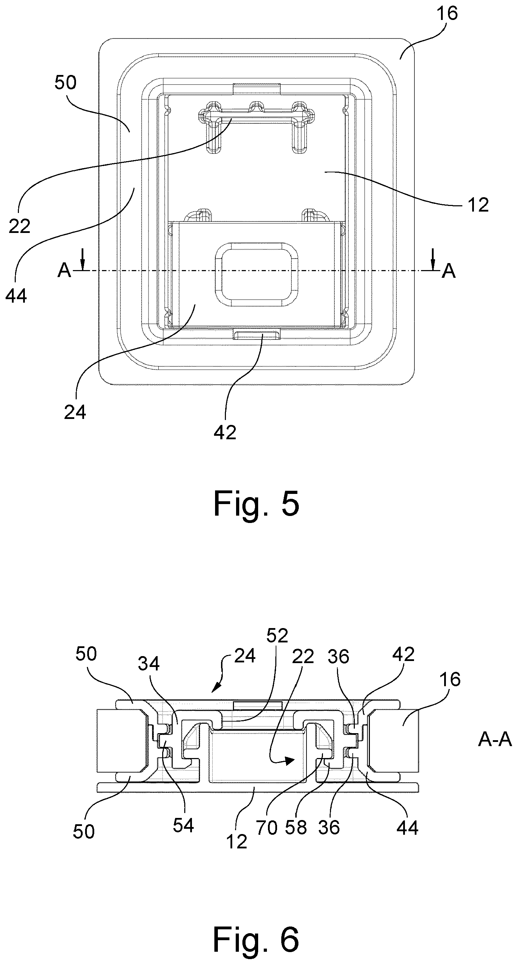

Fig. 5 zeigt eine Draufsicht des mit dem ersten Verbindungsabschnitt 22 verbundenen zweiten Verbindungsabschnitts 24. Die beiden Verbindungsteile 42, 44 sind miteinander verbunden und umschließen das Dämpfungselement 16 mit den Kragen 50. Der erste Verbindungsabschnitt 22 ist (einstückig) an dem Containerdeckel 12 ausgebildet. Von dem Dämpfungselement 16 sowie dem Containerdeckel 12 ist dabei nur ein Ausschnitt dargestellt.

Fig. 6 zeigt eine Schnittdarstellung der Verbindung aus erstem Verbindungsabschnitt 22, den beiden Verbindungsteilen 42, 44, dem Verriegelungsschlitten 34, dem Ausschnitt des Dämpfungselements 16 und dem Ausschnitt des Containerdeckels 12 mit einem Schnittverlauf (A-A) und einer Projektionsrichtung aus Fig. 5. Die beiden Verbindungsteile 42, 44 umschließen mit deren Kragen 50 das Dämpfungselement 16. Der Verriegelungsschlitten 34 liegt innerhalb der Verbindungsteile 42, 44. Die Gleitrippen 54 des Verriegelungsschlittens 34 liegen jeweils mit deren containerdeckelnahen und -fernen Seite an den Rippen 36 der Verbindungsteile 42, 44 an. Die Verriegelungsrippen 58 des Verriegelungsschlittens 34 hintergreifen die Verriegelungsschienen 70 des ersten Verbindungsabschnitt 22.

Wie man aus der Fig. 4 erkennen kann, ist das Rechteck, welches die Verriegelungsschienen 70 zusammen mit dem Vorsprung 66 des ersten Verbindungsabschnitts 22 aufspannen, (in Längsrichtung) kleiner als das Rechteck, welches durch die Innenabmessungen der Verbindungsteile 42, 44 definiert wird. Wie in Fig. 6 erkennbar, entspricht die Breite der Verriegelungsschiene 70 der lichten Breite, d.h. der Innenbreite, des Verriegelungsschlittens 34. Die Breite des Verriegelungsschlittens 34, d.h. der Abstand der Gleitrippen 54 von einander entspricht der lichten Breite, d.h. der Innenbreite, der Verbindungsteile 42, 44 zwischen den Rippen 36. Dies bedeutet, dass, wenn die zwei Verbindungsteilen 42, 44 und der zwischen diesen liegenden Verriegelungsschlitten 34, im geöffneten Zustand, über den ersten Verbindungsabschnitt 22 gestülpt wird und der Verriegelungsschlitten 34 in Richtung der Verriegelungsschiene 70 verschoben wird und somit mit den Verriegelungsschienen 70 verrastet, sind die Verbindungsabschnitte 22 und 24 in Höhenrichtung und in Breitenrichtung miteinander fest bzw. ortsfest verbunden, der Verbindungsabschnitt 22 ist aber innerhalb der Verbindungsteile 42, 44 in Längsrichtung (in Erstreckungsrichtung des Verriegelungsschlittens 34) zu einem gewissen Maß verschiebbar bzw. sind die Verbindungsabschnitte 22 und 24 in Längsrichtung relativ verschiebbar. Dieses Maß reicht aus, um Toleranzunterschiede zwischen Containerdeckel 12 und Dämpfungselement 16 auszugleichen. Die Fixierung in jeweils eine orthogonale Richtung stellt dennoch die Zentrierung des Dämpfungselements 16 gegenüber dem Containerdeckel 12 sicher.

Zum Verriegeln und Entriegeln des Verbindungssystems werden jeweils die beiden Verriegelungsschlitten 34 der ersten und zweiten Verbindungspaare 18, 20 in entgegengesetzte Richtungen geschoben. Dies reduziert die Belastung des Dämpfungselements 16 beim Verriegeln und Entriegeln gegenüber einer gleichgerichteten Verschiebung.

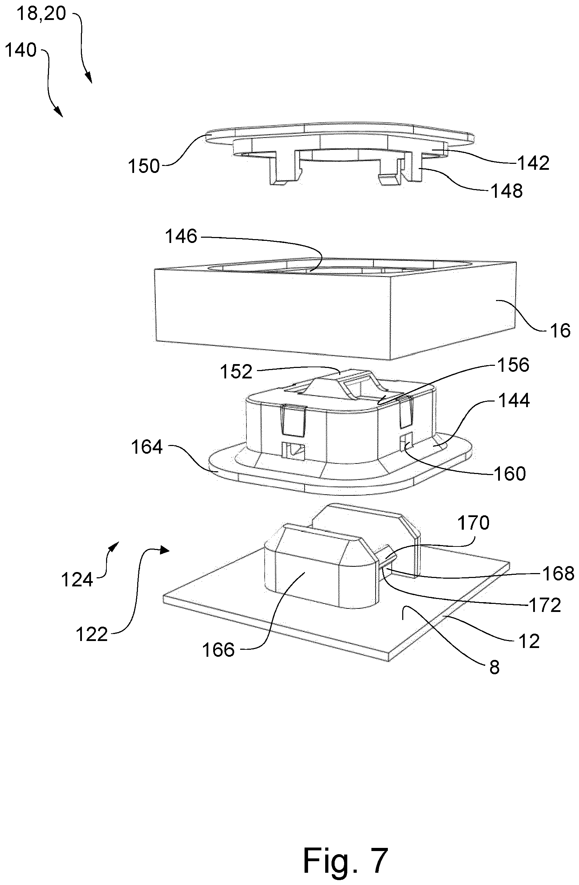

Fig. 7 zeigt eine isometrische Explosionsdarstellung eines ersten oder zweiten Verbindungspaars 18, 20 in einer zweiten Ausführungsform als Clipsystem 140, einen Ausschnitt des Dämpfungselements 16 sowie einen Ausschnitt des Containerdeckels 12. Das Clipsystem 140 umfasst einen ersten Verbindungsabschnitt 122, der am Containerdeckel 12 ausgebildet ist, und zwei Verbindungsteile 142, 144, die zusammen den zweiten Verbindungsabschnitt 124 bilden.

Das Dämpfungselement 16 weist vier, im Wesentlichen rechteckige, Ausnehmungen 146 auf und zwar an den Stellen, an denen es mit dem Containerdeckel 12 verbunden werden soll, d.h. im Bereich der Verbindungspaare 18, 20.

Das Verbindungsteil 144 des Verbindungsabschnitts 124 ist wannen- oder topfförmig ausgebildet, mit einem Boden auf der einen Seite und einem umlaufenden Kragen 164 auf der anderen Seite. Das Verbindungsteil 144 wird mit dem Boden voraus von derjenigen Seite, welche am Containerdeckel 12 anliegen soll, in die Ausnehmung 146 des Dämpfungselements 16 eingesteckt.

Der Boden des topfförmigen Verbindungsteils 144 hatte eine zentrale Ausnehmung 156, welche durch ein brückenförmiges Handhabungselement 152 überspannt wird. Zu beiden Seiten des brückenförmigen Handhabungselements 152 wird über die Ausnehmung 156 ein Zugang zu den Federzungen 180 geschaffen, um diese zu betätigen und außer Eingriff zu bringen.

Das andere Verbindungsteil 142 des Verbindungsabschnitts 124 ist rechtecks- und ringförmig ausgebildet, ebenfalls mit einem umlaufenden Kragen 150 und vier, senkrecht auf dem Kragen 150 stehenden Schnapphaken 148, welche an allen vier Seiten des Verbindungsteils 142 jeweils mittig vorgesehen sind. Das Verbindungsteil 142 wird mit den Schnapphaken 148 voraus von der anderen Seite in die Ausnehmung 146 des Dämpfungselements 16 eingesteckt. Dabei übergreift das Verbindungsteil 142 das Verbindungsteil 144 und die Schnapphaken 148 des Verbindungsteils 142 greifen in entsprechende seitliche Ausnehmungen 160 in dem Verbindungsteil 144, so dass die beiden Verbindungsteile miteinander verrasten.

Wenn die beiden Verbindungsteile 142 und 144 miteinander verrastet sind, liegt der umlaufenden Kragen 150 des Verbindungsteils 142 an der einen Seite des Dämpfungsteils 16 und der umlaufenden Kragen 150 des Verbindungsteils 144 an der anderen Seite des Dämpfungsteils an, so dass die beiden Verbindungsteile 142 und 144 das Dämpfungsteil 16 sandwichartig zwischen sich aufnehmen bzw. einspannen. Dadurch wird eine Relativbewegung zwischen Verbindungsabschnitt 124 und dem Dämpfungselement 16 unterbunden. Im verbundenen Zustand bilden die Verbindungsteile 142 und 144 den zweiten Verbindungsabschnitt 124.

Der erste Verbindungsabschnitt 122, welcher (einstückig) an der Innenseite 8 des Containerdeckels 12 ausgebildet ist, weist zwei zueinander beabstandete und sich parallel erstreckende Vorsprünge 166 auf, welche ein Rechteck aufspannen. Zwischen den beiden Vorsprüngen 166 befinden sich zwei parallel verlaufende Verbindungsrippen 168, die Rastkanten 170 mit jeweils einem nach außen gerichteten Hinterschnitt 172 aufweisen.

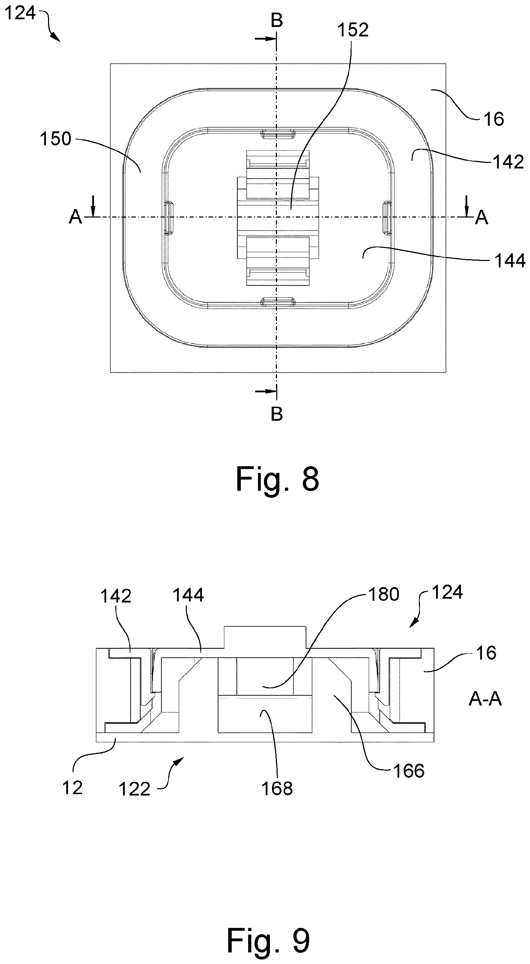

Fig. 8 zeigt eine Draufsicht des zweiten Verbindungsabschnitts 124, bestehend aus den beiden miteinander verrasteten Verbindungsteilen 142 und 144. Die Verbindungsteile 142, 144 umschließen das Dämpfungselement 16 mit dem Kragen 150 des Verbindungsteils 124 und dem verdeckten Kragen 164 des Verbindungsteils 144. Der umlaufende Kragen 150 ist mit dem Boden des topfförmigen Verbindungsteils 144 bündig. Über das Handhabungselement 152 lässt sich die Einheit aus zweitem Verbindungsabschnitt 124 und Dämpfungselement 16 handhaben und mit dem verdeckten ersten Verbindungsabschnitt 122 verbinden und davon lösen.

Fig. 9 zeigt eine Schnittdarstellung des verbundenen ersten Verbindungsabschnitts 122, zweiten Verbindungsabschnitts 124, der mithilfe dessen Verbindungsteilen 142, 144 das Dämpfungselement 16 umschließt, und des Containerdeckels 12 mit einem Schnittverlauf (A-A) und einer Projektionsrichtung aus Fig. 8. Von dem Containerdeckel 12 und dem Dämpfungselement 16 ist dabei nur ein Ausschnitt dargestellt. Auf halber Breite des Verbindungsteils 144 ist eine Federzunge 180 ausgebildet, die mit dem breiteren verdeckten Hinterschnitt 72 der verdeckten Rastkante der Verbindungsrippe 168 verrastet ist.

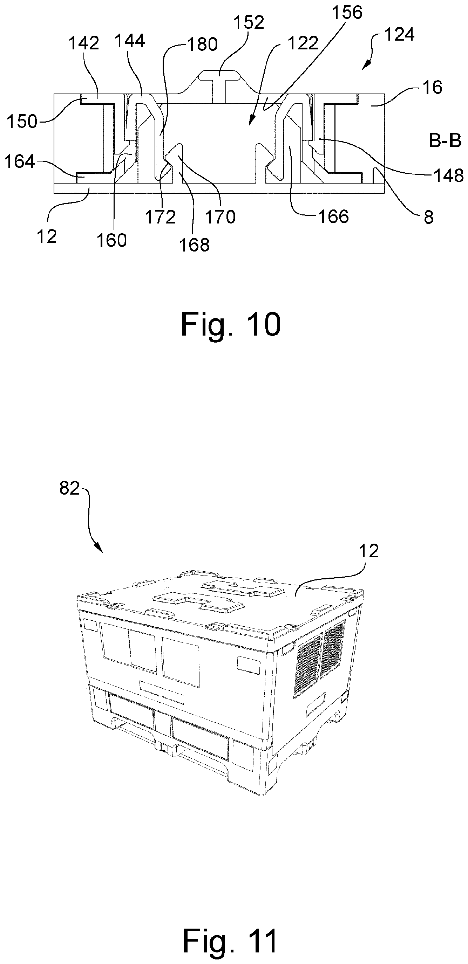

Fig. 10 zeigt eine Schnittdarstellung der Verbindung aus ersten Verbindungsabschnitt 122, zweiten Verbindungsabschnitt 124, Verbindungsteil 142, Verbindungsteil 144, die das Dämpfungselement 16 umschließen, und Containerdeckel 12 mit einem Schnittverlauf (B-B) und einer Projektionsrichtung aus Fig. 8. Von dem Containerdeckel 12 und dem Dämpfungselement 16 ist dabei nur ein Ausschnitt dargestellt. Der Querschnitt des Handhabungselements 152 ist T-förmig ausgebildet. Die Ausnehmung 156 erstreckt sich bis zu den Federzungen 180. Das Verbindungsteil 142 übergreift das Verbindungsteil 144. Die Schnapphaken 148 des Verbindungsteils 142 sind in den Ausnehmungen 160 des Verbindungsteils 144 verrastet. Der umlaufende Kragen 164 des Verbindungsteil 144 liegt auf der Innenseite 8 des Containerdeckels 12 auf. Die Federzungen 180 des Verbindungsteils 144 umgreifen die Hinterschnitte 172 der Rastkanten 170. Der Kragen 150 des Verbindungsteils 142 und der Kragen 164 des Verbindungsteils 144 bilden eine umlaufendes C-förmiges Profil aus, welches das Dämpfungselement 16 umschließt. Der Vorsprung 166 liegt links und rechts an einer Innenseite des Verbindungsteils 144 an.

Wie aus den Fign. 9 und 10 erkennbar ist, weist das topfförmige Verbindungsteil 144 innen, an den zwei einander gegenüberliegenden langen Seiten zwei sich zur offenen Seite hin erstreckende Federzungen 180 auf, welche, wenn das topfförmige Verbindungsteil 144 des zweiten Verbindungsabschnitts 124 auf den ersten Verbindungsabschnitt 122 am Containerdeckel 12 gestülpt wird, mit den Rastkanten 170 der Verbindungsrippe 168 des ersten Verbindungsabschnitts 122 verrasten.

Wie man aus den Fign. 7, 9 und 10 erkennen kann, ist das Rechteck, welches die Vorsprünge 166 des ersten Verbindungsabschnitts 122 aufspannen, (in Tiefenrichtung der Fig. 7, d.h. in Erstreckungsrichtung der Verbindungsrippe 168) kürzer als das Rechteck, welches durch die Innenabmessungen des topfförmigen Verbindungsteils 144 definiert wird. In ihrer Breite (in Breitenrichtung der Fig. 7, d.h. in Erstreckungsrichtung des Vorsprungs 166) entsprechen sich die beiden Rechtecke. Ferner sind die Federzungen 180 des Verbindungsteils 144 schmäler als die Verbindungrippen 168 bzw. Rastkanten 170 des Verbindungsabschnitts 122. Dies bedeutet, dass, wenn das topfförmige Verbindungsteil 144 über die Vorsprünge 166 bzw. über den ersten Verbindungsabschnitt 122, gestülpt wird und die Federzungen 180 mit den Rastkanten 170 verrasten, die Verbindungsabschnitte 122 und 124 in Höhenrichtung und in Breitenrichtung (der Fig. 7) miteinander fest bzw. ortsfest verbunden sind, aber der Verbindungsabschnitt 122 innerhalb des topfförmigen Verbindungsteils 144 in Tiefenrichtung (der Fig. 7, d. h. in Erstreckungsrichtung der Verbindungsrippen 168) zu einem gewissen Maß verschiebbar ist bzw. die Verbindungsabschnitte 122 und 124 in Erstreckungsrichtung der Verbindungsrippen 168 relativ verschiebbar sind. Dieses Maß reicht aus, um Toleranzunterschiede zwischen Containerdecke 12 und Dämpfungselement 16 auszugleichen.

Sowohl die Vorsprünge 166 als auch die Innenkante des topfförmigen Verbindungsteils 144 sind mit Einführschrägen versehen, so dass sich das topfförmige Verbindungsteil 144 beim Stülpen über die Vorsprüngen selbstzentrieren.

Fig. 11 zeigt einen Container 82 mit aufgesetztem Containerdeckel 12.

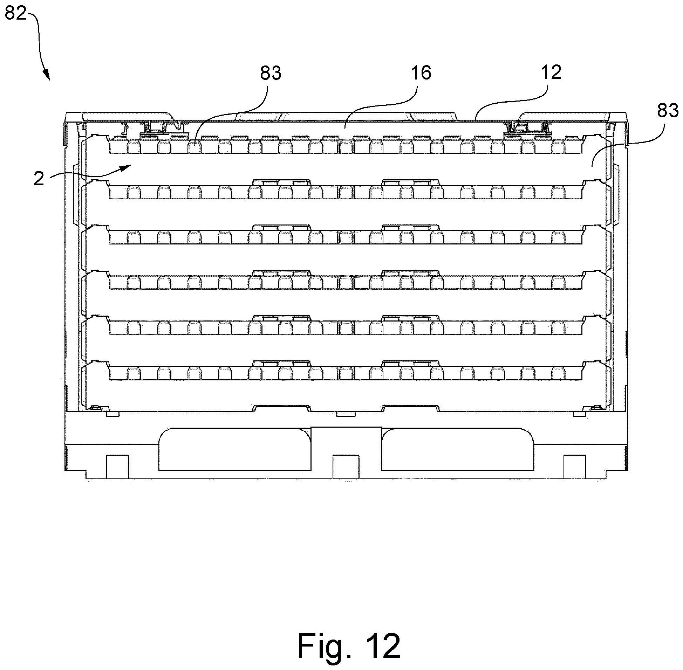

Fig. 12 zeigt eine Schnittdarstellung des Containers 82 mit aufgesetztem Containerdeckel 12 und dem, mithilfe des Verbindungssystems 2 mit diesem verbundenen, Dämpfungselement 16. Das Dämpfungselement 16 stellt einen zweiten Deckel zur Auflage auf seitlichen inneren Auskleidungs- oder Dämpfungselementen 83 dar und eine deckt mehrere weitere innere Verpackungs- oder Transporteinheiten 84 ab.

Die vorliegenden Figuren beschreiben die Verbindung eines Dämpfungselements 16 an einem Containerdeckel 12. Das Verbindungssystem 2 kann jedoch ebenso an jeder anderen Innenwand einer Verpackungseinheit, wie Seitenwänden, Boden, Trennwänden und dergleichen verwendet werden. Ebenso ist das Verbindungssystem 2 nicht auf die Verwendung an einem Verpackungssystem beschränkt und kann für jede Verbindung zweier Elemente mit unterschiedlichen (Fertigungs-) Toleranzen, insbesondere, wenn eines der beiden Teile eine hohe (Fertigungs-) Toleranz aufweist, verwendet werden.

Die Anzahl an Verbindungspaaren ist nicht auf zwei pro Richtung beschränkt, so können auch drei oder mehr Verbindungspaare pro Richtung Anwendung finden. Dies kann insbesondere bei größeren Belastungen und/oder Abmessungen sinnvoll sein.

Die Einzelteile des Verbindungssystems können aus einem Thermoplasten und insbesondere in einem Spritzgussverfahren hergestellt sein.

## Patentansprüche

1. Verbindungssystem (2) zum positionsgenauen und lösbaren Verbinden von zwei Teilen, insbesondere von zwei Teilen, welche auf unterschiedliche Weisen gefertigt werden und unterschiedliche Herstellungstoleranzen aufweisen, vorzugsweise von einer äußeren, vorzugsweise spritzgegossenen, Verpackungseinheit (12) und einer inneren, vorzugweise aus Schaumstoff hergestellten, Verpackungseinheit (16), mit
einem ersten Verbindungspaar (18) aus einem mit dem einen Teil verbundenen oder verbindbaren ersten Verbindungabschnitt (22; 122) und einem mit dem anderen Teil verbundenen oder verbindbaren zweiten Verbindungabschnitt (24; 124), und
einem zweiten Verbindungspaar (20) aus einem mit dem einen Teil verbundenen oder verbindbaren ersten Verbindungabschnitt (22; 122) und einem mit dem anderen Teil verbundenen oder verbindbaren zweiten Verbindungabschnitt (24; 124), wobei
das erste Verbindungspaar (18) eine formschlüssige und lösbare Verbindung eingehen kann, welche einen translatorischen Freiheitsgrad in x-Richtung erlaubt und translatorische Freiheitsgrade in y- und z-Richtung unterbindet; und
das zweite Verbindungspaar (20) eine formschlüssige und lösbare Verbindung eingehen kann, welche einen translatorischen Freiheitsgrad in y-Richtung erlaubt und translatorische Freiheitsgrade in x- und z-Richtung unterbindet.

2. Verbindungssystem (2) nach Anspruch 1, mit
zwei ersten Verbindungspaaren (18), wobei die beiden ersten Verbindungspaare (18) in x-Richtung auf einer Linie (26) angeordnet sind; und
zwei zweiten Verbindungspaaren (20), wobei die beiden zweiten Verbindungspaare (20) in y-Richtung auf einer Linie (30) angeordnet sind.

3. Verbindungssystem (2) nach Anspruch 2, wobei
die beiden ersten Verbindungabschnitte (22; 122) der beiden ersten Verbindungspaare (18) auf einer ersten Symmetrielinie oder Seitenhalbierenden (28) des ersten Teils angeordnet sind; und
die beiden ersten Verbindungabschnitte (22; 122) der beiden zweiten Verbindungspaare (20) auf einer zweiten Symmetrielinie oder Seitenhalbierenden (32) des ersten Teils angeordnet sind.

4. Verbindungssystem (2) nach einem der Ansprüche 1 bis 3, wobei
der zweite Verbindungsabschnitt (24; 124) zwei, vorzugsweise identische, Verbindungsteile (42, 44; 142, 144) aufweist, welche von zwei entgegengesetzten Richtungen in eine Ausnehmung (46; 146) einsetzbar und miteinander lösbar, vorzugsweise über eine Clip-Verbindung (48; 148), verbindbar sind und das zweite Teil zwischen sich mit umlaufenden Randabschnitten (50; 150, 164) sandwichartig aufnehmen oder einklemmen.

5. Verbindungssystem (2) nach einem der Ansprüche 1 bis 4, wobei
der erste Verbindungsabschnitt (122) des ersten Verbindungspaars (18) eine in x-Richtung verlaufende Rastgeometrie, insbesondere zwei parallele Rastkanten (170), aufweist und der zweite Verbindungsabschnitt (124) des ersten Verbindungspaars (18) eine x-Richtung verlaufende Rastgeometrie, insbesondere zwei parallel angeordnete Rasthaken (180), aufweist, um eine Rastverbindung einzugehen; und
der erste Verbindungsabschnitt (122) des zweiten Verbindungspaars (20) eine in y-Richtung verlaufende Rastgeometrie, insbesondere zwei parallele Rastkanten (170), aufweist und der zweite Verbindungsabschnitt (124) des zweiten Verbindungspaars (20) eine y-Richtung verlaufende Rastgeometrie, insbesondere zwei parallel angeordnete Rasthaken (180), aufweist, um eine Rastverbindung einzugehen.

6. Verbindungssystem (2) nach Anspruch 5, wobei
der zweite Verbindungsabschnitt (124), insbesondere dessen eines Verbindungsteil (144), welches die Rastgeometrie aufweist, ein Handhabungselement (152) aufweist, in welches bzw. welches ein Effektor einer Automation eingreifen und/ oder umgreifen und die Rastgeometrien in z-Richtung in eine Rastposition oder aus einer Rastposition bringen kann.

7. Verbindungssystem (2) nach einem der Ansprüche 1 bis 4, wobei
der erste Verbindungsabschnitt (22) des ersten Verbindungspaars (18) eine in x-Richtung verlaufende Verriegelungsgeometrie, insbesondere zwei parallel verlaufende Hinterschnitte (72), aufweist und der zweite Verbindungsabschnitt (24) des ersten Verbindungspaars (18) ein in x-Richtung verschiebbares Verriegelungselement (34) aufweist, welches mit dem zweiten Verbindungabschnitt (24) gekoppelt ist, zwischen einer Entriegelungsposition und einer Verriegelungsposition verschiebbar ist und eine Verriegelungsgeometrie, insbesondere zwei parallel verlaufende Verriegelungsrippen (58), aufweist, welche in der Verriegelungsposition die Verriegelungsgeometrie des ersten Verbindungsabschnitts (22) in z-Richtung hintergreift und in y-Richtung, insbesondere beidseitig, kontaktiert; und
der erste Verbindungsabschnitt (22) des zweiten Verbindungspaars (20) eine in y-Richtung verlaufende Verriegelungsgeometrie, insbesondere zwei parallel verlaufende Hinterschnitte (72), aufweist und der zweite Verbindungsabschnitt (24) des zweiten Verbindungspaars (20) ein in y-Richtung verschiebbares Verriegelungselement (34) aufweist, welches mit dem zweiten Verbindungabschnitt (24) gekoppelt ist, zwischen einer Entriegelungsposition und einer Verriegelungsposition verschiebbar ist und eine Verriegelungsgeometrie, insbesondere zwei parallel verlaufende Verriegelungsrippen (58), aufweist, welche in der Verriegelungsposition die Verriegelungsgeometrie des ersten Verbindungsabschnitts (22) in z-Richtung hintergreift und in x-Richtung, insbesondere beidseitig, kontaktiert.

8. Verbindungssystem (2) nach Anspruch 7, wobei
das Verriegelungselement (34) eine Handhabungsöffnung (52) aufweist, in welche ein Effektor einer Automation in z-Richtung eingreifen und wahlweise das Verriegelungselement (34) in die x-Richtung oder y-Richtung in die Verriegelungsposition oder in die Entriegelungsposition verschieben kann.

9. Container (82) mit
einer äußeren, vorzugsweise spritzgegossenen, Verpackungseinheit (12);
einer inneren, vorzugweise aus Schaumstoff hergestellten, Verpackungseinheit (16); und
einem Verbindungssystem (2) nach einem der Ansprüche 1 bis 8, wobei
das erste Teil ein Wandungsabschnitt, vorzugsweise ein Deckel, der äußeren Verpackungseinheit (12) ist und der erste Verbindungsabschnitt (22; 122) einstückig mit dem ersten Teil ausgebildet ist;
der zweite Teil ein plattenförmiges Wandelement, vorzugsweise eine Abdeckung, der inneren Verpackungseinheit (16) ist und der zweite Verbindungsabschnitt (24; 124) in eine Ausnehmung (46; 146) in dem Wandelement einsetzbar ist.

## Geänderte Patentansprüche

### Geänderte Patentansprüche gemäss Regel 137(2) EPÜ.

1. Anordnung aus zwei Teilen, insbesondere von zwei Teilen, welche auf unterschiedliche Weisen gefertigt werden und unterschiedliche Herstellungstoleranzen aufweisen, vorzugsweise von einer äußeren, vorzugsweise spritzgegossenen, Verpackungseinheit (12) und einer inneren, vorzugweise aus Schaumstoff hergestellten, Verpackungseinheit (16), und einem Verbindungssystem (2) zum positionsgenauen und lösbaren Verbinden der zwei Teile, wobei das Verbindungssystem (2) aufweist:
zwei erste Verbindungspaare (18), jeweils aus einem mit dem einen Teil verbundenen oder verbindbaren ersten Verbindungabschnitt (22; 122) und einem mit dem anderen Teil verbundenen oder verbindbaren zweiten Verbindungabschnitt (24; 124), und
zwei zweite Verbindungspaare (20), jeweils aus einem mit dem einen Teil verbundenen oder verbindbaren ersten Verbindungabschnitt (22; 122) und einem mit dem anderen Teil verbundenen oder verbindbaren zweiten Verbindungabschnitt (24; 124), wobei
die ersten Verbindungspaare (18), jeweils eine formschlüssige und lösbare Verbindung eingehen können, welche einen translatorischen Freiheitsgrad in x-Richtung erlaubt und translatorische Freiheitsgrade in y- und z-Richtung unterbindet und in x-Richtung auf einer Linie (26) angeordnet sind; und
die zweiten Verbindungspaare (20), jeweils eine formschlüssige und lösbare Verbindung eingehen können, welche einen translatorischen Freiheitsgrad in y-Richtung erlaubt und translatorische Freiheitsgrade in x- und z-Richtung unterbindet und in y-Richtung auf einer Linie (30) angeordnet sind.

2. Anordnung nach Anspruch 1, wobei
die beiden ersten Verbindungabschnitte (22; 122) der beiden ersten Verbindungspaare (18) auf einer ersten Symmetrielinie oder Seitenhalbierenden (28) des ersten Teils angeordnet sind; und
die beiden ersten Verbindungabschnitte (22; 122) der beiden zweiten Verbindungspaare (20) auf einer zweiten Symmetrielinie oder Seitenhalbierenden (32) des ersten Teils angeordnet sind.

3. Anordnung Anordnung nach Anspruch 1 oder 2, wobei
der zweite Verbindungsabschnitt (24; 124) zwei, vorzugsweise identische, Verbindungsteile (42, 44; 142, 144) aufweist, welche von zwei entgegengesetzten Richtungen in eine Ausnehmung (46; 146) einsetzbar und miteinander lösbar, vorzugsweise über eine Clip-Verbindung (48; 148), verbindbar sind und das zweite Teil zwischen sich mit umlaufenden Randabschnitten (50; 150, 164) sandwichartig aufnehmen oder einklemmen.

4. Anordnung nach einem der Ansprüche 1 bis 3, wobei
der erste Verbindungsabschnitt (122) der ersten Verbindungspaare (18) eine in x-Richtung verlaufende Rastgeometrie, insbesondere zwei parallele Rastkanten (170), aufweist und der zweite Verbindungsabschnitt (124) der ersten Verbindungspaare (18) eine x-Richtung verlaufende Rastgeometrie, insbesondere zwei parallel angeordnete Rasthaken (180), aufweist, um eine Rastverbindung einzugehen; und
der erste Verbindungsabschnitt (122) der zweiten Verbindungspaare (20) eine in y-Richtung verlaufende Rastgeometrie, insbesondere zwei parallele Rastkanten (170), aufweist und der zweite Verbindungsabschnitt (124) der zweiten Verbindungspaare (20) eine y-Richtung verlaufende Rastgeometrie, insbesondere zwei parallel angeordnete Rasthaken (180), aufweist, um eine Rastverbindung einzugehen.

5. Anordnung nach Anspruch 4, wobei
der zweite Verbindungsabschnitt (124), insbesondere dessen eines Verbindungsteil (144), welches die Rastgeometrie aufweist, ein Handhabungselement (152) aufweist, in welches bzw. welches ein Effektor einer Automation eingreifen und/ oder umgreifen und die Rastgeometrien in z-Richtung in eine Rastposition oder aus einer Rastposition bringen kann.

6. Anordnung nach einem der Ansprüche 1 bis 3, wobei
der erste Verbindungsabschnitt (22) der ersten Verbindungspaare (18) eine in x-Richtung verlaufende Verriegelungsgeometrie, insbesondere zwei parallel verlaufende Hinterschnitte (72), aufweist und der zweite Verbindungsabschnitt (24) der ersten Verbindungspaare (18) ein in x-Richtung verschiebbares Verriegelungselement (34) aufweist, welches mit dem zweiten Verbindungabschnitt (24) gekoppelt ist, zwischen einer Entriegelungsposition und einer Verriegelungsposition verschiebbar ist und eine Verriegelungsgeometrie, insbesondere zwei parallel verlaufende Verriegelungsrippen (58), aufweist, welche in der Verriegelungsposition die Verriegelungsgeometrie des ersten Verbindungsabschnitts (22) in z-Richtung hintergreift und in y-Richtung, insbesondere beidseitig, kontaktiert; und
der erste Verbindungsabschnitt (22) der zweiten Verbindungspaare (20) eine in y-Richtung verlaufende Verriegelungsgeometrie, insbesondere zwei parallel verlaufende Hinterschnitte (72), aufweist und der zweite Verbindungsabschnitt (24) der zweiten Verbindungspaare (20) ein in y-Richtung verschiebbares Verriegelungselement (34) aufweist, welches mit dem zweiten Verbindungabschnitt (24) gekoppelt ist, zwischen einer Entriegelungsposition und einer Verriegelungsposition verschiebbar ist und eine Verriegelungsgeometrie, insbesondere zwei parallel verlaufende Verriegelungsrippen (58), aufweist, welche in der Verriegelungsposition die Verriegelungsgeometrie des ersten Verbindungsabschnitts (22) in z-Richtung hintergreift und in x-Richtung, insbesondere beidseitig, kontaktiert.

7. Anordnung nach Anspruch 6, wobei
das Verriegelungselement (34) eine Handhabungsöffnung (52) aufweist, in welche ein Effektor einer Automation in z-Richtung eingreifen und wahlweise das Verriegelungselement (34) in die x-Richtung oder y-Richtung in die Verriegelungsposition oder in die Entriegelungsposition verschieben kann.

8. Container (82) mit
einer äußeren, vorzugsweise spritzgegossenen, Verpackungseinheit (12);
einer inneren, vorzugweise aus Schaumstoff hergestellten, Verpackungseinheit (16); und
einem Verbindungssystem (2) nach einem der Ansprüche 1 bis 7, wobei das erste Teil ein Wandungsabschnitt, vorzugsweise ein Deckel, der äußeren Verpackungseinheit (12) ist und der erste Verbindungsabschnitt (22; 122) einstückig mit dem ersten Teil ausgebildet ist;
der zweite Teil ein plattenförmiges Wandelement, vorzugsweise eine Abdeckung, der inneren Verpackungseinheit (16) ist und der zweite Verbindungsabschnitt (24; 124) in eine Ausnehmung (46; 146) in dem Wandelement einsetzbar ist.
